# EUROPÄISCHE PATENTSCHRIFT

(11) **EP 0 956 761 B1**
(45) Veröffentlichungstag und Bekanntmachung des Hinweises auf die Patenterteilung: **28.08.2002**
(21) Anmeldenummer: 99106906.3
(22) Anmeldetag: 08.04.1999
(51) Int. Cl.: A01F 15/14

(54) **Knüpfapparat für Ballenpressen**
Knotting device for baling presses
Dispositif noué pour presses à balles

(30) Priorität: 30.04.1998 DE 19819595
(43) Veröffentlichungstag der Anmeldung: 17.11.1999
(73) Patentinhaber: LAVERDA S.p.A., 36042 Breganze (Vicenza) (IT)
(72) Erfinder: Prellwitz, Hubert Dipl.-Ing, 01844 Neustadt (DE)
(74) Vertreter: De Gregori, Antonella

(56) Entgegenhaltungen:
- DE-C- 622 348
- DE-U- 9 015 883
- DE-U- 9 418 048
- FR-A- 2 469 110
- US-A- 2 644 703

## Beschreibung

Die Erfindung betrifft einen Knüpfapparat für Ballenpressen, der zum Umbinden von quaderförmigen Ballen aus landwirtschaftlichen Erntegütern, nachwachsenden Rohstoffen, Textilabfällen, recyclingfähigem Material und dergleichen durch Umhüllung dieser Ballen mit Bindegarn und Verschließen der Umhüllung nach Erreichen der gewünschten Länge durch Knotenbildung geeignet ist, mit den Merkmalen nach dem Oberbegriff des Patentanspruches 1.

Derartige Knüpfapparate werden am häufigsten in Ballenpressen zur Bildung von Ballen aus landwirtschaftlichen Erntegütern eingesetzt, wobei der Einsatz in den sogenannten Quadergroßballenpressen dominiert. Dort sind auf der Oberseite des Preßkanals aufgrund der großen Breite dieser Ballen 4 bis 6 dieser Knüpfapparate nebeneinander angeordnet.

Eine Ausführungsvariante dieser Knüpfapparate ist im DE 90 15 883 U1 beschrieben, bei der auf der Knüpferwelle die aus einer langen Nabe und dem Knüpferkranz bestehende Knüpferscheibe verdrehsicher befestigt ist. Auf dieser Nabe ist das Lagerauge des Knüpferbockes gleitgelagert und dessen anderes Ende ist mit Laschen eines Trägers verschraubt, der auf der Oberwand des Preßkanals angeschweißt ist. Der Knüpferbock nimmt alle zum Knüpfapparat gehörenden Arbeitselemente auf, die vom Knüpferkranz aus angetrieben werden. Zur Einstellung des richtigen Abstandes zwischen dem Knüpferbock und dem Knüpferkranz hat es sich bei dieser Lösung bewährt, mittels einer Nutenmutter, die auf das Ende der Nabe aufgeschraubt und mit geeigneten Sicherungselementen in jeder Stellung fixierbar ist, das Lagerauge des Knüpferbockes auf den Knüpferkranz hin zu verstellen, was vorteilhafterweise ohne Demontage des Knüpfapparates möglich ist. Sollte es aufgrund von Verschleißerscheinungen oder schadhafter Teile am Knüpferbock einmal notwendig werden, den gesamten Knüpferbock auszutauschen oder ihn instandzusetzen und erneut einzubauen, besitzt dessen Lagerauge zu öffnende Sollbruchstellen, so daß der gesamte Knüpferbock nach der Instandsetzung wieder eingesetzt werden kann, ohne die Knüpferscheibe, benachbarte Knüpfapparate und die Knüpferwelle zu entfernen. Das ist deshalb möglich, weil das ausgebrochene Stück des Lagerauges einfach wieder aufgesetzt werden kann und mit beide Hälften des Lagerausges durchdringenden Schraubverbindungen wieder zum geschlossenen Lagerauge zusammenschraubbar ist. Trotz dieses vorteilhaften Aufbaues verbleibt aber noch ein entscheidender Nachteil im Falle von Havarieschäden bzw. von Verschleißerscheinungen an den Verzahnungen des Knüpferkranzes, weil dann die Demontage und die Montage der gesamten Knüpfeinrichtung vorgenommen werden muß. Das erfordert einen hohen Zeit- und Kostenaufwand und es schmälert die Einsatzzeit der Ballenpresse auf dem Feld erheblich. Dieser hohe Aufwand entsteht dadurch, weil zumindest seitliche Verkleidungsteile neben der Knüpfeinrichtung entfertnt werden müssen, der Antrieb für die Nadelschwinge zu entkuppeln ist, die Lagerungen der Knüpferwelle in den Seitenwänden zu lösen sind, sämtliche Verschraubungen des Knüpferbockes am Träger auf der Oberwand des Preßkanals zu entfernen sind und die Zuleitungen der Zentralschmierung abgeschraubt werden müssen. Erst dann ist das Abziehen der Knüpfapparate von der Knüpferwelle möglich.

Schließlich soll noch auf eine weitere Ausführungsvariante von Knüpfapparaten hingewiesen werden, die an Hochdrucksammelpressen der deutschen Firma FORTSCHRITT an den Typen "K 441" "und" K 441/1 " zum Einsatz gekommen ist und deren Aufbau aus der Bedienungsanleitung mit dem Druckvermerk "III-25-8-1133-2 Ir-1-63 " und dem Ersatzteilkatalog mit dem Druckvermerk "III-19-2 Ir 82/63 "7000 10127" zu entnehmen ist. Hierbei handelt es sich um Knüpfapparate des "Cormic "-Systems, wobei deren Lageraugen der Knüpferböcke auf der Knüpferwelle gleitgelagert sind und unmittelbar daneben die Knüpferscheiben mit ihren Naben verdrehsicher und axial fixiert mit der Knüpferwelle verbunden sind. Diese Knüpferscheiben sind einschließlich ihrer Naben in einer Mittelebene neben den Verzahnungen mit Sollbruchstellen ausgestattet, die im Bedarfsfall mittels eines Keils aufgetrieben werden können, bis sie in zwei Hälften zerplatzen. Soll an diese Stelle eine neue Knüpferscheibe eingesetzt werden, ist sie vor der Montage zu spalten und mit dafür vorgesehenen Schraubverbindungen wieder zusammenzufügen, wenn nicht die gesamte Knüpfeinrichtung demontiert werden soll. Dieser vermeintliche Vorteil ist jedoch, gemessen an den heutigen Anforderungen an Knüpfapparate, mit unakzeptablen Nachteilen verbunden. Durch das Zusammenfügen beider Hälften ist es aufgrund nicht auszuschaltender Toleranzen im Sitz der Knüpferscheibe auf der Knüpferwelle nicht zu vermeiden, daß deren Gleitfläche für das Ritzel des Fadenfängers und des Knoterschnabels zwei Erhöhungen bzw. Absenkungen aufweisen wird. Das kann einmal zum Einspießen der Gleitflächenvorderkante der Ritzel an diesen Stellen und damit zu schweren Schäden am gesamten Knüpfapparat führen. Außerdem verursachen derartige Höhenunterschiede in der Gleitfläche einen vorzeitigen Verschleiß an den Gleitflächen der Ritzel und deren Lagerungen im Knüpferbock. Letztendlich erzeugen diese Höhenunterschiede Stöße, deren Folge Funktionsstörungen bei der Knotenbildung sind.

Deshalb liegt der Erfindung die Aufgabe zugrunde, einen Knüpfapparat für Ballenpressen zu schaffen, dessen Knüpferbock und wenigstens der Knüpferkranz der Knüpferscheibe separat und mit geringem Zeit- und Kostenaufwand ausbaufähig sind, ohne daß durch diese Maßnahmen auch unter höchster Beanspruchung am Knüpfapparat schwere Schäden, vorzeitiger Verschleiß und Funktionsstörungen bei der Knotenbildung auftreten.

Diese Aufgabe wird durch den Gegenstand des Patentanspruches 1 gelöst, wobei in den darauf bezogenen Unteransprüchen Merkmale aufgeführt sind, die diese Lösung in vorteilhafter Weise weiterentwickeln und auf die hier deshalb ausdrücklich verwiesen wird.

Durch den erfindungsgemäßen Aufbau der Knüpfapparate ist es möglich geworden, nach dem Lösen der den Flansch der Nabe und den Knüpferkranz verbindenden Sechskantschrauben zuerst den Knüpferkranz von der Nabe zu lösen. Danach kann nach dem Ausbau des Einsatzstückes aus dem Knüpferkranz dieser über die Nabe abgezogen werden, weil die im Umfang des Knüpferkranzes durch den Ausbau des Einsatzstückes entstandene Öffnung in der Breite wenigstens dem Außendurchmesser der Nabe der Knüpferscheibe entspricht.

Wegen einer einfachen Gestaltung des Einsatzstückes und zur Vermeidung von Unterbrechungen in den Verzahnungen des Knüpferkranzes hat es sich als zweckmäßig erwiesen, das Einsatzstück am Knüpferkranz in einem Bereich außerhalb der Verzahnungen anzuordnen.

Zum anderen hat es sich aus der Sicht eines festen und jederzeit reproduzierbaren Sitzes des Einsatzstückes im Knüpferkranz bewährt, das Einsatzstück einmal beidseitig mittels Senkkopfschrauben am Knüpferkranz zu befestigen und zusätzlich noch mit seinen Überständen beidseitig zwischen dem Flansch der Nabe und dem Knüpferkranz anzuordnen und an diesen Stellen mittels Sechskantschrauben diese Teile miteinander zu verbinden.

Damit ist ein wesentlicher Vorteil entstanden, der sich ganz besonders bei Knüpfeinrichtungen mit einer Vielzahl von Knüpfapparaten positiv bemerkbar macht, weil durch den damit möglich gewordenen separaten Aus- und Einbau einzelner oder aller Knüpferkränze die Knüpfeinrichtung nun nicht mehr mit hohem Zeit- und Kostenaufwand demontiert und anschließend montiert werden muß. Außerdem verursachen die dazu getroffenen Maßnahmen trotz höchster Beanspruchung der Knüpfapparate keine zusätzlichen Schäden, keinen vorzeitigen Verschleiß und keine Funktionsstörungen an den Knüpfapparaten bei der Knotenbildung.

Die Erfindung soll nun anhand eines Ausführungsbeispiels näher erläutert werden, wobei die einzelnen Figuren zeigen:
- Fig. 1:: eine Rückansicht auf eine Knüpfeinrichtung einer Quadergroßballenpresse mit fünf Knüpfapparaten
- Fig. 2:: einen Knüpfapparat nach Fig. 1 mit der Knüpferscheibe im Schnitt
- Fig. 3:: eine Vorderansicht auf einen Knüpfapparat mit der Knüpferscheibe im Schnitt
- Fig. 4:: eine Ansicht A nach Fig. 2 auf die Knüpferscheibe ohne Knüpferbock
- Fig. 5:: einen Schnitt A - A nach Fig. 4
- Fig. 6:: einen Knüpferkranz ohne Einsatzstück
- Fig. 7:: ein Einsatzstück

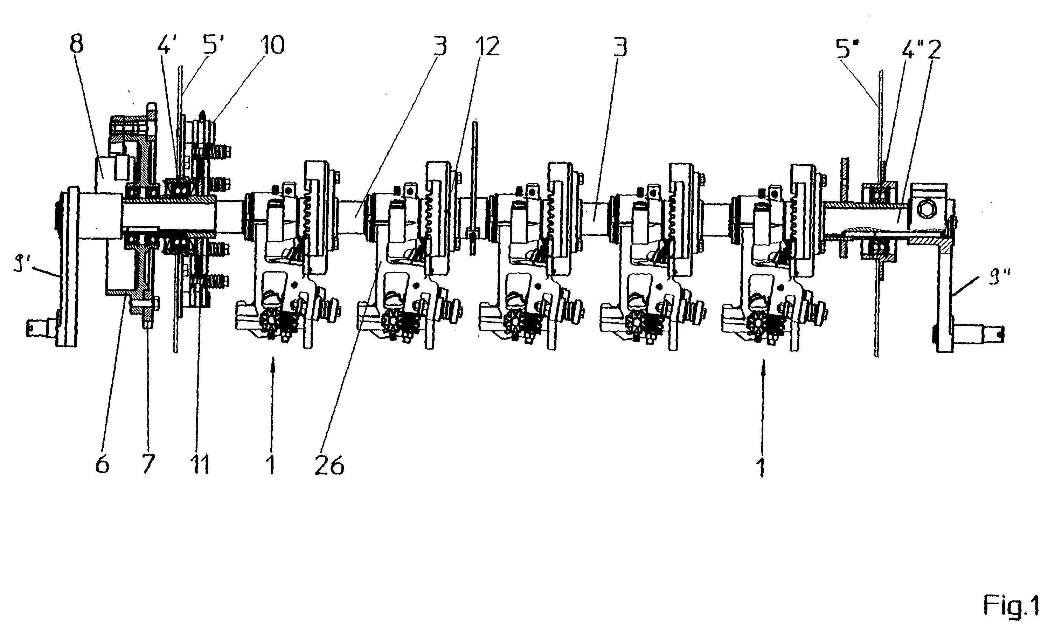

Figur 1 zeigt eine auf die Fahrtrichtung der Quadergroßballenpresse bezogene Rückansicht einer aus fünf Knüpfapparaten 1 bestehenden Knüpfeinrichtung. Alle Knüpfapparate (1) sind nebeneinander auf die Knüpferwelle 2 gesteckt, wobei ihr Abstand untereinander durch Distanzbuchsen 3 ganz exakt festgelegt ist. Die Knüpferwelle 2 ist beidseitig in Lagern 4', 4'' aufgenommen, die mit auf der Oberwand des Preßkanals angebrachten Seitenwänden 5', 5" verschraubt sind. Der Antrieb für die Knüpferwelle 2 und die nicht dargestellte Nadelschwinge erfolgt über ein mit der Schaltglocke 6 verbundenes Antriebsrad 7, wobei über eine Eintourenkupplung 8 im gewünschten Augenblick der Knotenbildung kurzzeitig eine verdrehsichere Verbindung zur Knüpferwelle 2 und damit auch zu den Antriebskurbeln 9', 9'' der Nadelschwinge hergestellt wird. Eine an der linken Seitenwand 5' befestigte Bremseinrichtung 10 umfaßt eine verdrehsicher mit der Knüpferwelle 2 verbundene Bremsscheibe 11.

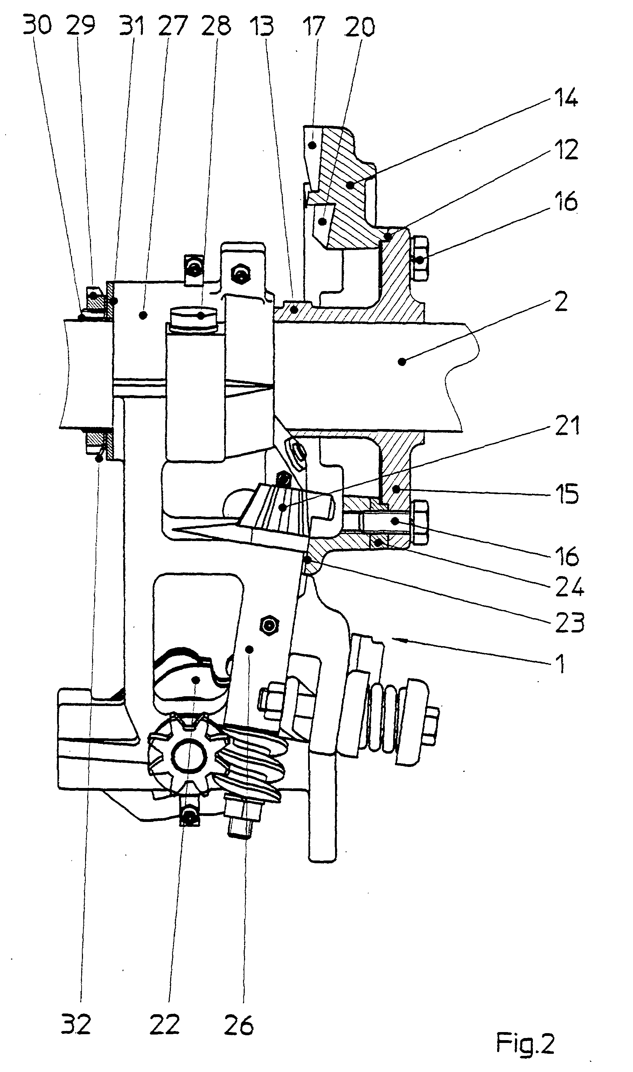

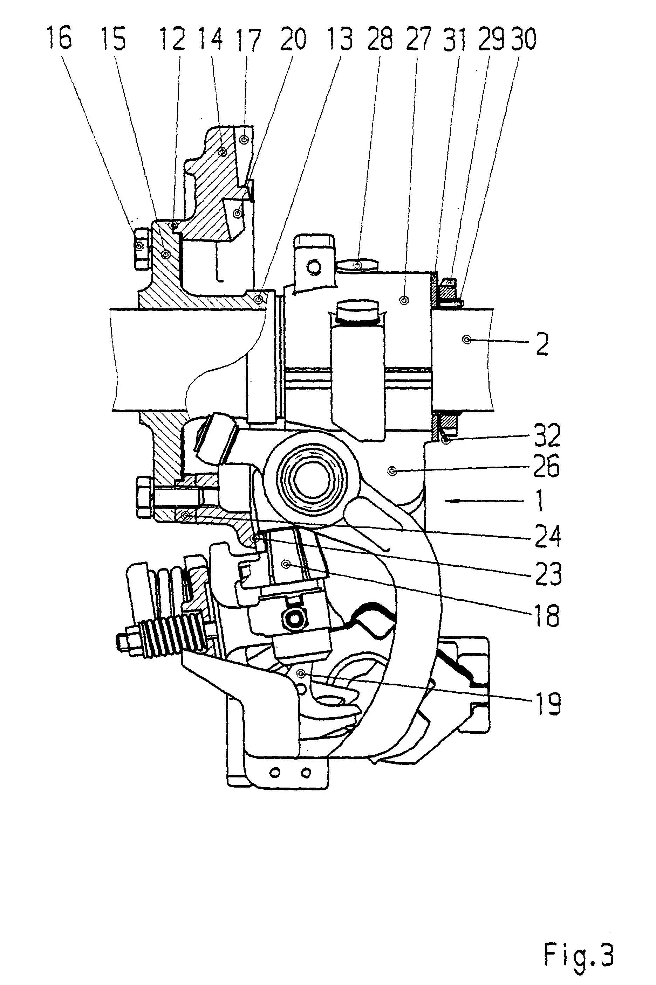

Die Figuren 2 und 3 zeigen einen einzelnen Knüpfapparat 1 in Rückansicht nach Figur 2 und von vorn nach Figur 3. Jeder Knüpfapparat 1 besitzt eine tellerförmige Knüpferscheibe 12, die aus einer Nabe 13 und einem Knüpferkranz 14 besteht. Die Nabe 13 ist verdrehsicher und in gewissen Grenzen axial verschiebebeweglich auf die Knüpferwelle 2 aufgesteckt. Sie hat einenends einen Flansch 15, an dem der Knüpferkranz 14 mit drei Sechskantschrauben 16 befestigt ist. Der Knüpferkranz 14 weist einmal ein Stück äußere Verzahnung 17 zum Antrieb des Ritzels 18 für den Knoterschnabel 19 und zum anderen ein Stück innere Verzahnung 20 zum Antrieb des Ritzels 21 für den Fadenfänger 22 auf. Außerdem ist er im Bereich seines äußeren Umfanges mit einer Gleitfläche 23 ausgestattet, die als Verdrehsicherung für die Ritzel 18, 21 während ihres Nichteingriffes in die Verzahnungen 17, 20 wirkt.

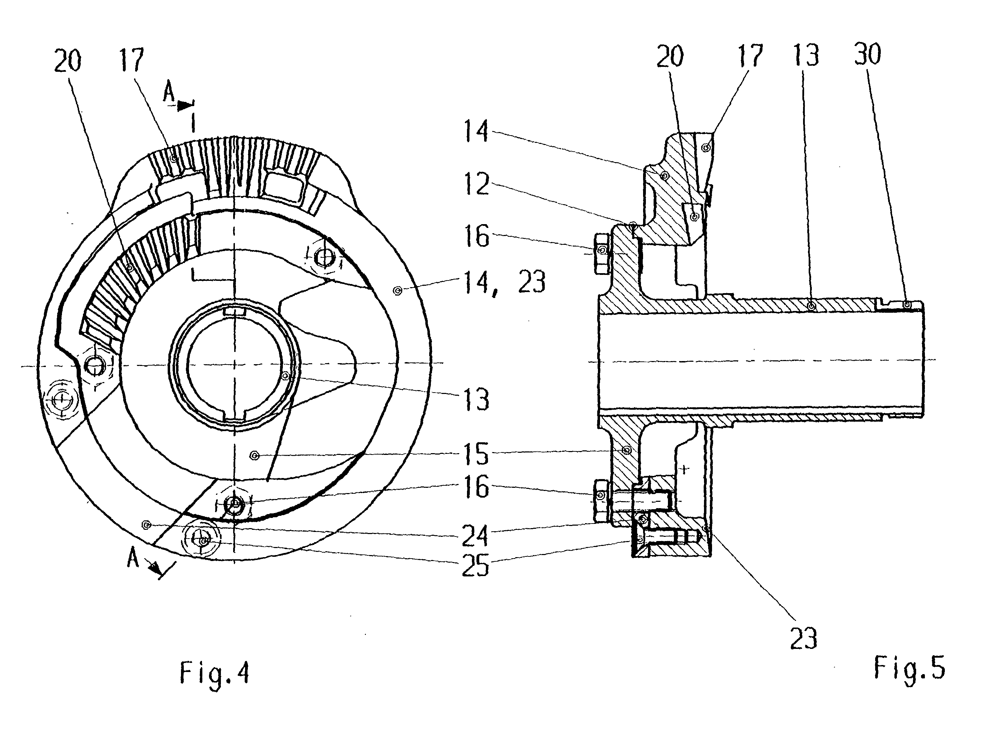

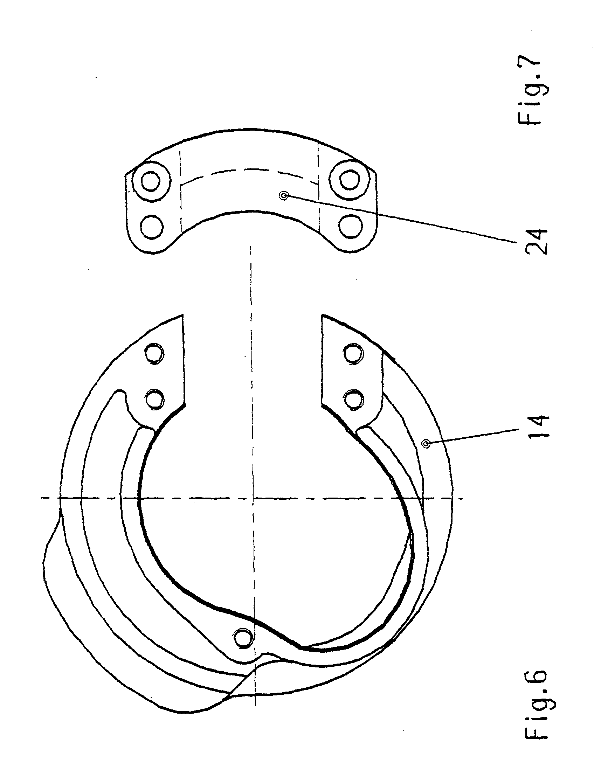

In den Figuren 4 und 5 ist im zusammengebauten Zustand der Knüpferscheibe 12 zu sehen, daß ein Teilstück des Knüpferkranzes 14 als lösbar befestigtes Einsatzstück 24 ausgebildet ist. Dieses Einsatzstück 24 ist zum ersten beidseitig mit Senkkopfschrauben 25 an den Knüpferkranz 14 angeschraubt und außerdem noch zwischen dem Flansch 15 der Nabe 13 und dem Knüpferkranz 14 angeordnet und gemeinsam mit diesen durch zwei der drei Sechskantschrauben 16 verbunden.

Figur 7 zeigt das aus dem Knüpferkranz 14 ausgebaute Einsatzstück 24 als Einzelteil. Die dadurch im Umfang des Knüpferkranzes 14 freigegebene Öffnung nach Figur 6 ist wenigstens so breit wie der Außendurchmesser der Nabe 13 der Knüpferscheibe 12. Der direkt neben der Knüpferscheibe 12 angeordnete übrige Teil des Knüpfapparates 1, der als Knüpferbock 26 bezeichnet wird und der alle zur Knotenbildung erforderlichen Arbeitselemente trägt, ist mit seinem unteren Teil am Preßkanal angeschraubt. Sein als Lagerauge 27 bezeichnetes oberes Teil ist mit seiner gesamten Breite auf der Nabe 13 der Knüpferscheibe 12 gleitgelagert, wobei das zweigeteilte Lagerauge 27 mit langen Schrauben 28 zusammengehalten wird Schließlich ist noch eine stufenlose axiale Verstellung des Lagerbockes 26 relativ zur Knüpferscheibe 12 durch Verschieben seines Lagerauges 27 auf der Nabe 13 möglich. Das ist durch eine Nutenmutter 29 realisiert, die auf das als Gewindestück 30 ausgebildete Ende der Nabe 13 aufgeschraubt ist und über eine Anlaufscheibe 31 auf den Bund des Lagerauges 27 drückt. Eine geeignete Sicherungsscheibe 32 fixiert dabei die Nutenmutter 29 an jeder beliebigen Stelle.

### Bezugszeichenaufstellung

- 1: Knüpfapparat
- 2: Knüpferwelle
- 3: Distanzbuchse
- 4', 4": Lager
- 5', 5": Seitenwand
- 6: Schaltglocke
- 7: Antriebsrad
- 8: Eintourenkupplung
- 9', 9": Antriebskurbel
- 10: Bremseinrichtung
- 11: Bremsscheibe
- 12: Knüpferscheibe
- 13: Nabe
- 14: Knüpferkranz
- 15: Flansch
- 16: Sechskantschraube
- 17: äußere Verzahnung
- 18: Ritzel
- 19: Knoterschnabel
- 20: innere Verzahnung
- 21: Ritzel
- 22: Fadenfänger
- 23: Gleitfläche
- 24: Einsatzstück
- 25: Senkkopfschraube
- 26: Knüpferbock
- 27: Lagerauge
- 28: Schraube
- 29: Nutenmutter
- 30: Gewindestück
- 31: Anlaufscheibe
- 32: Sicherungsscheibe

## Patentansprüche

1. Knüpfapparat für Ballenpressen,
- der aus einer drehfest mit der Knüpferwelle (2) verbundenen und die Arbeitselemente des Knüpferbockes (26) antreibenden Knüpferscheibe (12) besteht,
- dessen Knüpferscheibe (12) eine Nabe (13) und einen lösbar mit dieser verbundenen Knüpferkranz (14) aufweist, der die Verzahnungen (17, 20) und die Gleitfläche (23) für das Ritzel (18) des Knoterschnabels (19) und das Ritzel (21) des Fadenfängers (22) trägt,
- dessen Knüpferbock (26) einenends fest an der Ballenpresse angebracht ist und der anderenends auf der Nabe (13) der Knüpferscheibe (12) gelagert ist, **dadurch gekennzeichnet, daß**
a) am Knüpferkranz (14) ein Einsatzstück (24) lösbar befestigt und bezüglich seiner Lage reproduzierbar einsetzbar ist
b) die Breite der vom Einsatzstück (24) freigebenen Öffnung im Umfang des Knüpferkranzes (14) wenigstens dem Außendurchmesser der Nabe (13) der Knüpferscheibe (12) entspricht.

2. Knüpfapparat nach Anspruch 1 **dadurch gekennzeichnet, daß** sich das Einsatzstück (24) am Knüpferkranz (14) in einem Bereich außerhalb der Verzahnungen (17, 20) für das Ritzel (18) des Knoterschnabels (19) und das Ritzel (21) des Fadenfängers (22) befindet.

3. Knüpfapparat nach den Ansprüchen 1 und 2, **dadurch gekennzeichnet, daß** die Nabe (13) einenends einen Flansch (15) aufweist, an dem der Knüpferkranz (14) mittels Sechskantschrauben (16) befestigt ist.

4. Knüpfapparat nach den Ansprüchen 1 bis 3, **dadurch gekennzeichnet, daß** das Einsatzstück (24) beidseitig einmal mit Senkkopfschrauben (25) am Knüpferkranz (14) angeschraubt und zum anderen zwischen dem Flansch (15) der Nabe (13) und dem Knüpferkranz (14) angeordnet und gemeinsam mit diesen durch die Sechskantschrauben (16) verbunden ist.

## Claims

1. A knotting device for baling presses.
- which consists of a knotter disc (12) rigidly connected to the knotter shaft (2) and which drives the working elements of the knotter frame (26),
- the knotter disc (12) of which possesses a hub (13) and a knotter ring (14) removably connected to it, which carries the gear teeth (17, 20) and the sliding surface (23) for the pinion (18) of the knotter tip (19) and the pinion (21) of the thread catcher (22),
- the knotter frame (26) of which is attached at one end rigidly to the bale press and at the other end is carried on the hub (13) of the knotter disc (12), **characterised in that**
a) On the knotter ring (14) an insert (24) is removably attached and is capable of being reproducibly inserted as regards its position
b) the width of the opening in the circumference of the knotter ring (14) exposed by the insert (24) corresponds at least to the external diameter of the hub (13) of the knotter disc (12).

2. A knotting device in accordance with claim 1, **characterised in that**, the insert (24) on the knotter ring (14) is situated in an area outside the gear teeth (17, 20) for the pinion (18) of the knotter tip (19) and the pinion (21) for the thread catcher (22).

3. A knotting device in accordance with claims 1 and 2, **characterised in that**, the hub (13) posseses a flange (15) at one end, onto which the knotter ring (14) is attached by means of hexagon head screws (16).

4. A knotting device in accordance with claims 1 to 3, **characterised in that**, on the one hand the insert (24) is screwed once onto the knotter ring (14) on both sides with countersunk head screws (25) and on the other hand it is arranged between the flange (15) of the hub (13) and the knotter ring (14) and connected to this by the hexagon head screws (16).

## Revendications

1. Mécanisme noueur pour presses-botteleuses
- lequel comporte un disque porte-ficelle (12) relié de manière à résister à la torsion à l'arbre de noueur (2) et commandant les éléments de travail du support de noueur (26),
- dont le disque porte-ficelle (12) comporte un moyeu (13) et une couronne porte-ficelle desserrable (14) reliée de manière amovible au disque en question, qui porte les dentures (17, 20) et la surface de glissement (23) pour le pignon (18) du bec de noueur (19) et le pignon (21) du reteneur de ficelle (22),
- dont le support de noueur (26) est monté de manière fixe à la presse-botteleuse à l'une de ses extrémités et dont l'autre extrémité repose sur le moyeu (13) du disque porte-ficelle (12), **caractérisé en ce que**
a) une pièce intercalaire (24) est fixée de manière amovible sur la couronne porte-ficelle (14) et peut être utilisée de manière reproductible relativement à sa position,
b) la largeur de l'ouverture libérée par la pièce intercalaire (24) dans le périmètre de la couronne porte-ficelle (14) correspond au moins au diamètre extérieur du moyeu (13) du disque porte-ficelle (12).

2. Mécanisme noueur selon la revendication 1, **caractérisé en ce que** la pièce intercalaire (24) sur la couronne porte-ficelle (14) se trouve dans un secteur extérieur aux dentures (17, 20) pour le pignon (18) du bec de noueur (19) et le pignon (21) du reteneur de ficelle (22).

3. Mécanisme noueur selon les revendications 1 et 2, **caractérisé en ce que** le moyeu (13) présente, à une extrémité, une bride (15) sur laquelle la couronne porte-ficelle (14) est fixée au moyen de vis hexagonales (16).

4. Mécanisme noueur selon les revendications 1 à 3, **caractérisé en ce que** la pièce intercalaire (24) est vissée des deux côtés, d'une part, avec des vis à tête fraisée (25) sur la couronne porte-ficelle (14) et, d'autre part, est disposée entre la bride (15) du moyeu (13) et la couronne porte-ficelle (14) et est reliée à ces éléments par les vis hexagonales (16).
